# EUROPÄISCHE PATENTSCHRIFT

(11) **EP 0 624 786 B1**
(45) Veröffentlichungstag und Bekanntmachung des Hinweises auf die Patenterteilung: **07.01.1999**
(21) Anmeldenummer: 94810261.1
(22) Anmeldetag: 04.05.1994
(51) Int. Cl.: G01N 21/86, G01N 21/59, B41F 33/00

(54) **Vorrichtung und Verfahren zur Erfassung von auf einer blatt- oder streifenartigen Vorlage neben- und/oder hintereinander angeordneten photometrischen Daten**
Device and method for measuring photometric data arranged side by side and/or one after the other on a sheet or a strip
Dispositif et méthode de mesure des valeurs photométriques arrangées côté à côté et/ou l'une derrière l'autre sur une feuille ou une bande

(30) Priorität: 13.05.1993 CH 1466/93
(43) Veröffentlichungstag der Anmeldung: 17.11.1994
(73) Patentinhaber: GRETAG Aktiengesellschaft, CH-8105 Regensdorf (CH)
(72) Erfinder: Berner, Markus, CH-8155 Niederhasli (CH)
(74) Vertreter: Schwabe - Sandmair - Marx

(56) Entgegenhaltungen:
- DE-C- 3 930 782
- US-A- 5 062 714
- US-A- 5 118 183

## Beschreibung

Die Erfindung betrifft eine Vorrichtung und ein Verfahren zur Erfassung von auf einer blatt- oder streifenartigen Vorlage neben- und/oder hintereinander angeordneten photometrischen Daten gemäss Oberbegriff des Patentanspruchs 1 bzw. des Patentanspruchs 16.

Vorrichtungen zur Erfassung von photometrischen Daten, sogenannte Densitometer, werden vielfach in der fotografischen Industrie und im grafischen Gewerbe, insbesondere in Druckereien, eingesetzt. Densitometer können grundsätzlich in all denjenigen Bereichen eingesetzt werden, die mit vorgegebenen Drucken oder mit Testdrucken arbeiten. Neben den erwähnten bekannten Einsatzgebieten, können Densitometer auch im Desktop-Publishing eine Rolle spielen.

In der fotografischen Industrie werden Densitometer einerseits für die routinemässige Kontrolle der nasschemischen Anlagenteile und andererseits zur Überprüfung der Einstellung des fotografischen Kopiergerätes, des fotografischen Printers, eingesetzt. Zur Überprüfung der nasschemischen Anlagenteile, der Film-bzw. Papierentwicklungsbäder, werden entsprechende Filmchemie- bzw. Papierchemiestreifen ausgemessen. Diese Streifen sind bereits beim jeweiligen Film- bzw. Papierhersteller normiert belichtet worden und werden bei in regelmässigen Abständen in den jeweiligen Film- bzw. Papierentwicklungsbädern entwickelt. Die entwickelten Film- bzw. Papierstreifen werden mit dem Densitometer photometrisch ausgewertet und mit den Sollangaben des jeweiligen Herstellers verglichen. In Abhängigkeit von den ermittelten Ergebnissen werden die Entwicklungsbäder aufgefrischt bzw. ergänzt, erneuert oder auch unverändert beibehalten. Zur Überprüfung der Einstellung des fotografischen Printers werden ein oder mehrere Standardnegative auf Fotopapier belichtet und mit einer eingetesteten Chemie entwickelt. Die entwickelten Bilder werden mit dem Densitometer photometrisch ausgewertet und mit Sollvorgaben verglichen. In Abhängigkeit von den ermittelten Werten kann die Grundeinstellung des fotografischen Printers variiert werden.

Eine derartige gattungsgemässe Vorrichtung zur Erfassung von photometrischen Daten auf Film- oder Papierteststreifen ist in der US-A-5,118,183 beschrieben. Die densitometrische Vorrichtung ist sowohl für den Remissionsbetrieb für opake Teststreifen alsauch für den Transmissionsbetrieb von transparenten Teststreifen ausgerüstet und weist entsprechend eine ortsfeste Remissions- bzw. eine ortsfeste Transmissions-Messoptik auf. Ebenfalls ortsfest innerhalb des Gerätes angeordnete Filter erlauben es, die entsprechenden Remissions- bzw. Transmissionsdichten des Teststreifens für unterschiedliche Wellenlängen, vorzugsweise für die drei Grundfarben, Rot, Grün und Blau zu bestimmen. Eine in die Vorrichtung integrierte motorische Transporteinrichtung transportiert den Teststreifen längs durch das Gerät. Eine seitliche Führung erlaubt eine besseres Positionieren des Teststreifens, der über einen Einzugsschlitz dem Gerät zugeführt wird. Die seitliche Führung ist manuell auf die jeweilige Breite des Teststreifens einstellbar. Um auch Teststreifen auswerten zu können, die mehr als eine Kolonne von Testfeldern aufweisen, die beispielsweise in Längsrichtung nebeneinander auf dem Teststreifen angebracht sein können, ist die seitliche Führung nicht nur in ihrer Breite verstellbar, sondern sie ist gesamthaft quer zu der Einzugsrichtung des Teststreifens in die Vorrichtung verschiebbar. Auf diese Weise ist es möglich, einiges Geschick und Geduld für die Positionierung vorausgesetzt, mehrere nebeneinander angeordnete Messfeldkolonnen auszumessen.

Die Film- und Papierteststreifen verschiedener Hersteller weisen im allgemeinen unterschiedlich angeordnete Messfelder auf. Die Messfelder sind unterschiedlich gross, und sie können, insbesondere bei Papierteststreifen, in einer oder mehreren Kolonnen nebeneinander angeordnet sein. Die Anordnung aufeinanderfolgender Messfelder bezüglich einer Mittenspur einer Kolonne kann unterschiedlich sein, dass heisst, einzelne Messfelder sind bezüglich dieser Mittenspur leicht versetzt angeordnet. Auch können benachbarte Messfeldkolonnen eine unterschiedliche Anzahl von Messfeldern aufweisen. Das erste Messfeld einer Kolonne muss nicht notwendigerweise im selben Abstand von der vorlaufenden Kante des Teststreifens angeordnet sein wie das erste Messfeld der Nachbarkolonne. Die Teststreifen der unterschiedlichen Hersteller sind also sehr unterschiedlich gestaltet. Ein Operator, der mit der bekannten Vorrichtung einen Teststreifen ausmessen will, muss diesen sehr sorgfältig ausrichten, um sicherzustellen, dass an der richtigen Stelle gemessen wird. Abgesehen davon, dass diese Ausrichtprozedur zeitaufwendig ist, ist es schwierig, auf diese Weise Messfelder zu erfassen, die bezüglich der Mittenspur einer Kolonne versetzt angeordnet sind. Zu diesem Zweck muss der Operator den Teststreifen zunächst visuell beurteilen und dann entscheiden, um welche Strecke der Teststreifen gegenüber der Mittenspur der Kolonne versetzt eingegeben werden muss, um sowohl mittig angeordnete als auch versetzte Messfelder ausmessen zu können. Dies ist oftmals nur schwer zu bewältigen, ein fehlerhaftes Eingeben des Teststreifens kann zu falschen Messungen führen, die wiederholt werden müssen. Bei einzelnen Teststreifen kann es sogar vorkommen, dass keine seitliche Versetzung ausreicht, um alle Messfelder einer Kolonne zu erreichen.

Bei der bekannten Vorrichtung wird der Teststreifen automatisch durch die Vorrichtung hindurchtransportiert. Ein Walzenpaar, von denen eine Walze angetrieben ist, erfasst das vorlaufende Ende des Teststreifens und zieht ihn durch. Ist der Teststreifen erst mal von dem Walzenpaar erfasst, so kann er seitlich nicht mehr verschoben werden. Weist der Teststreifen mehr als eine Messfeldkolonne auf, die ausgemessen werden soll, so muss daher immer erst zunächst eine Kolonne fertig ausgemessen werden, der Teststreifen also vollständig durch die Vorrichtung hindurchtransportiert werden. Danach wird der Teststreifen in einer seitlich versetzten Lage derart in die Vorrichtung eingeführt, dass die Messfelder der benachbarten Kolonne ausgemessen werden können u.s.f. Der Teststreifen muss also für jede Messkolonne separat ausgerichtet werden, wobei der Operator gegebenenfalls jedesmal von neuem entscheiden muss, um welche Strecke der Teststreifen seitlich zu versetzen ist, sodass alle Messfelder zuverlässig erfasst werden.

Aufgabe der vorliegenden Erfindung ist es daher, diesen Nachteilen der bekannten Vorrichtung abzuhelfen. Insbesondere soll die Vorrichtung zur Erfassung von auf einer blatt- oder streifenartigen Vorlage neben- und/oder hintereinander angeordneten photometrischen Daten dahingehend verbessert werden, dass der Aufwand für das richtige Positionieren des Teststreifens deutlich vermindert wird. Der Operator soll nicht mehr entscheiden müssen, ob und in welchem Ausmass ein Teststreifen seitlich versetzt eingegeben werden soll. Die Vorrichtung soll es erlauben, benachbarte Messfeldkolonnen auszumessen, ohne dass der Teststreifen für jede Messfeldkolonne neu ausgerichtet werden muss. Es soll ermöglicht sein, auch dann benachbarte Messfeldkolonnen auszumessen, wenn der Teststreifen von der in der Vorrichtung angeordneten Transporteinrichtung erfasst ist. Die Vorrichtung soll derart beschaffen sein, dass unterschiedlich breite und/oder lange Teststreifen mit unterschiedlicher Anordnung der Messfelder fehlerfrei ausgemessen werden können.

Die vorstehenden und noch weitere damit zusammenhängende Aufgaben werden durch eine Vorrichtung und durch ein Verfahren zur Erfassung von auf einer blatt- oder streifenartigen Vorlage neben- und/oder hintereinander angeordneten photometrischen Daten gelöst, welche(s) die im kennzeichnenden Teil des Patentanspruchs 1 bzw. des Patentanspruchs 16 angeführten Merkmale bzw. Verfahrensschritte aufweist. Besonders bevorzugte Ausführungsvarianten der erfindungsgemässen Vorrichtung und des erfindungsgemässen Verfahrens sind Gegenstand der abhängigen Patentansprüche.

Insbesondere wird durch die Erfindung eine Vorrichtung zur Erfassung von auf einer blatt- oder streifenartigen Vorlage neben- und/oder hintereinander angeordneten photometrischen Daten geschaffen, welche aufgrund ihrer Konzeption beispielsweise in einen fotografischen Printer eingebaut sein kann, aber auch als "stand-alone" Gerät ausgebildet sein kann. Die Ausstattung der Vorrichtung zumindest mit einer Remissions-Messoptik gestattet das Ausmessen von opaken Vorlagen (beispielsweise Papierteststreifen zur Überprüfung der Papierentwicklungsbäder oder zur Kontrolle der Printergrundeinstellung). Im Strahlengang des Messlichtes angeordnete Filter erlauben eine Analyse der Messfelder in Wellenlängen, vorzugsweise in den drei Grundfarben Rot, Grün und Blau. Die Vorrichtung ist mit einer automatischen Transporteinrichtung für die blatt- oder streifenförmigen Vorlagen ausgestattet, die in Transportrichtung hinter der Messoptik angeordnet ist. Ein Einzugsspalt erlaubt ein Einschieben der Vorlagen in die Vorrichtung und ist für unterschiedliche Breiten der Vorlagen ausgebildet. Zumindest einseitig des Einzugsspaltes ist wenigstens ein Anschlag für die Vorlagen vorgesehen. Jeder Anschlag ist in Bezug auf den Einzugsspalt für die Vorlagen ortsfest. Die Remissions-Messoptik und die von der Transporteinrichtung erfasste und in Längsrichtung transportierte Vorlage sind relativ zueinander quer zur Einzugsrichtung bewegbar. Auf diese Weise können auch benachbarte Messfeldkolonnen ausgemessen werden, ohne die Vorlage zwischen den einzelnen Messungen neu positionieren zu müssen. Der Manipulationsaufwand für den Operator ist deutlich reduziert. Er muss nicht mehr entscheiden ob und um welche Strecke eine Vorlage (Teststreifen) seitlich versetzt eingegeben werden muss, um zu gewährleisten, dass alle Messfelder benachbarter Messfeldkolonnen ausgemessen werden können. Er muss nur sicherstellen, dass die Vorlage am entsprechenden Anschlag anliegt und dass sie weit genug in den Einzugsspalt eingeführt wird, um von der Transporteinrichtung erfasst zu werden; alles andere wird selbsttätig von der Vorrichtung erledigt.

Im folgenden wird die Erfindung anhand eines Ausführungsbeispiels mit allen ihr als wesentlich erscheinenden Einzelheiten unter Bezugnahme auf die Zeichnungen näher erläutert. Es zeigen in zum Teil schematischer Darstellung:
- Fig. 1: einen Längsschnitt der erfindungsgemässen Vorrichtung,
- Fig. 2: eine skizzierte Darstellung einer kombinierte Remissions-Messanordnung und Transmissions-Messanordnung innerhalb der Vorrichtung,
- Fig. 3: eine detailliertere Skizze der Remissions-Messanordnung gemäss Fig.3,
- Fig. 4: eine teilweise geschnittene Frontansicht der Vorrichtung,
- Fig. 5: eine Ansicht des Einzugsbereiches der Vorrichtung in teilweisem Schnitt
- Fig. 6: eine Aufsicht der Vorrichtung nach Fig. 1 und
- Fig. 7: eine Detailansicht Antriebskoppelung der Remissions-Messoptik und der Transporteinrichtung.

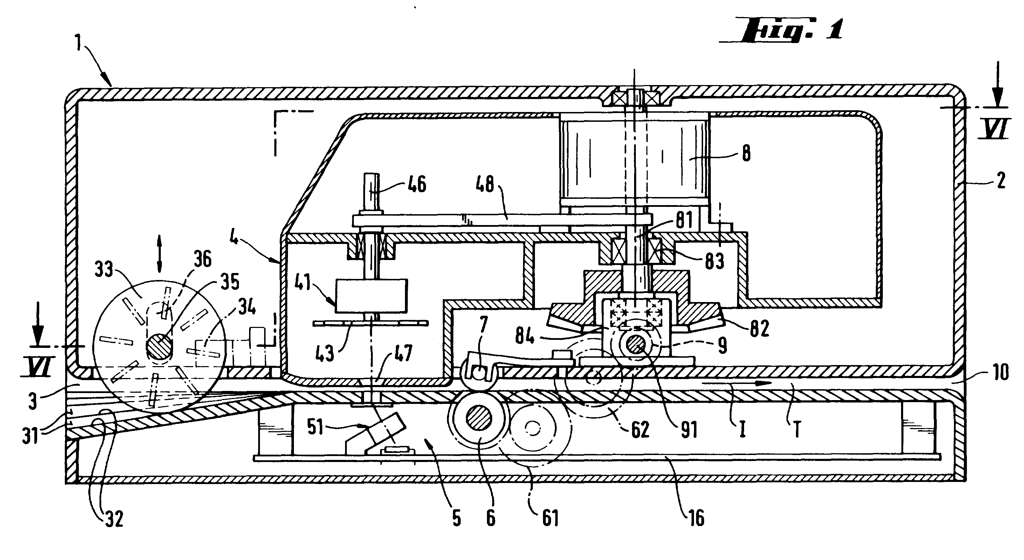

Eine beispielsweise Ausführungsvariante der erfindungsgemässen Vorrichtung zur Erfassung von auf einer blatt- oder streifenartigen Vorlage neben- und/oder hintereinander angeordneten photometrischen Daten ist in den Fig. 1, 4 und 6 jeweils gesamthaft mit dem Bezugszeichen 1 versehen. Die Vorrichtung weist vom Aufbau her gewisse Ähnlichkeiten mit dem in der US-A-5,118,183 beschriebenen Gerät auf. Insbesondere umfasst sie auch ein Gehäuse 2 mit einem Einzugsspalt 3. Im Bereich des Einzugsspalts 3 ist zumindest einseitig wenigstens ein Anschlag 31 für die Vorlage P vorgesehen. Innerhalb des Gehäuses 2 ist eine Transporteinrichtung 6,7 für den automatischen Einzug einer Vorlage P entlang einer Transportbahn T in das Gehäuseinnere angeordnet. Entlang der Transportbahn T für die Vorlage P sind eine Remissions-Messanordnung 4 mit einer Remissions-Messoptik 41 für opake Vorlagen und eine Transmissions-Messanordnung 5 mit einer Transmissions-Messoptik 51 für transparente Vorlagen angeordnet. Während ihres Transports entlang der Transportbahn wird die Vorlage P an beiden Messanordnungen vorbeibewegt. Im Falle einer opaken Vorlage wird diese von der Remissions-Messanordnung 4 ausgemessen, im Falle einer transparenten Vorlage von der Transmissions-Messanordnung 5.

Während es sich bei dem dargestellten Ausführungsbeispiel um eine Vorrichtung mit kombinierter Remissions- und Transmissions-Messanordnung handelt, kann die erfindungsgemässe Vorrichtung aber auch nur mit einer Remissions-Messanordnung ausgestattet sein. In diesem Fall ist sie nur für das Ausmessen opaker Vorlagen geeignet.

Der prinzipielle Aufbau einer kombinierten Remissions- und Transmissions-Messanordnung, wie er beispielsweise in den Densitometern der Anmelderin realisiert ist, ist in Fig. 2 skizziert. Die Remissions-Messanordnung weist eine Remissions-Messoptik 41 auf, die eine Lichtquelle 42, eine wellenlängendispersive Anordnung 43, sowie einen hinter der wellenlängendispersiven Anordnung 43 angeordneten lichtelektrische Empfänger 44 und einen Signalverstärker 45 umfasst. Etwaige Fokussierlinsen sind in der Skizze nicht dargestellt. Die Remissions-Messanordnung ist derart oberhalb der Transportebene T angeordnet, dass sie das von einer opaken Vorlage P remittierte Licht erfassen kann. Das remittierte Licht wird gesammelt und durch die wellenlängendispersive Anordnung 43 zum lichtelektrischen Empfänger 44 geleitet. Die vom lichtelektrischen Empfänger produzierten elektrischen Signale werden verstärkt und an eine Auswerteeinheit 16 weitergeleitet, wo die Signale umgesetzt und ausgewertet werden. Die Auswerteeinheit 16 ist mit nicht dargestellten Ein-/Ausgabeeinheiten verbunden, über die Informationen, beispielsweise die Art der Vorlage P betreffend der Auswerteeinheit mitgeteilt werden können, und welche weiters die bestimmten photometrischen Daten in einer geeigneten Form anzeigen. Als Eingabeeinheit ist üblicherweise eine Tastatur bzw. ein Tastenfeld vorgesehen. Die Ausgabeeinheit kann ein Bildschirm oder ein Drucker sein. Bei der wellenlängendispersiven Anordnung handelt es sich vorteilhafterweise um ein Filterrad 43, welches um eine Achse 46, die über einen Zahnriemen 48 mit einem Motor 8 (Fig. 1) verbunden ist, rotierbar ist.

Die Transmissions-Messanordnung 5 ist unterhalb der Transportebene T für die Vorlage P angeordnet. Sie umfasst eine Transmissions-Messoptik 51, deren Aufbau grosse Ähnlichkeit zu dem der Remissions-Messoptik 41 aufweist. Der wesentlichste Unterschied besteht darin, dass sie keine separate Lichtquelle umfasst, sondern die Lichtquelle 42 der der Remissions-Messoptik 41 benützt. Dabei wird das Licht von der oberhalb der Transportebene T angeordneten Lichtquelle 42 der Remissions-Messoptik 41 durch eine transparente Vorlage und durch eine Öffnung O in der Transportebene T auf die Transmissions-Messoptik 51 geleitet, dort gesammelt und erfasst und in elektrische Signale umgewandelt, die an die Auswerteeinheit 16 weitergeleitet werden, wo sie nach vorgegebenen spektralen Gesichtspunkten ausgewertet werden.

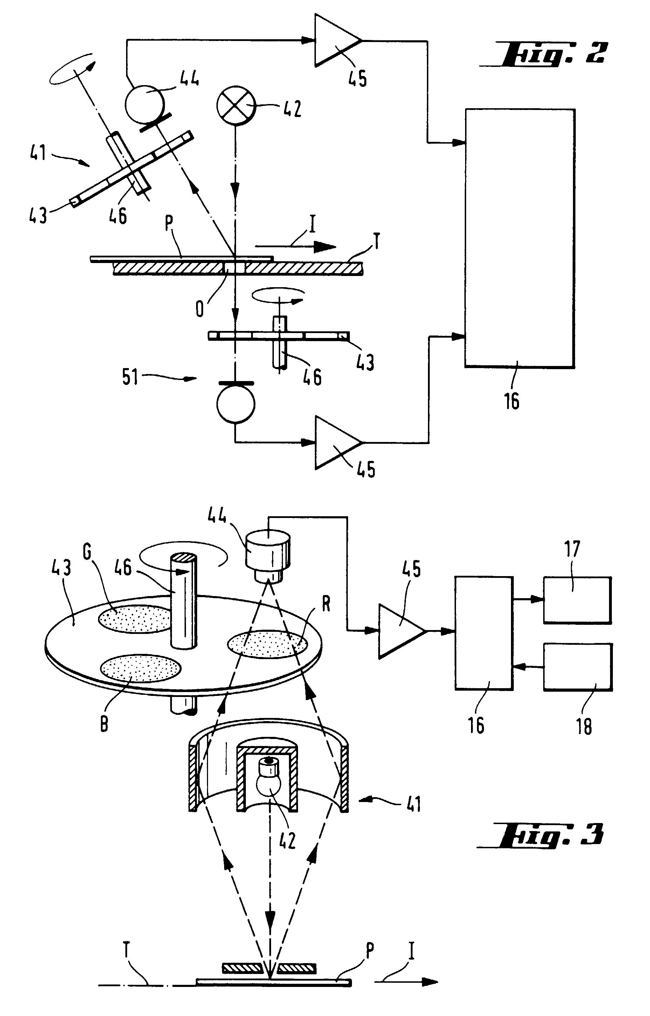

In Fig. 3 ist die Remissions-Messanordnung detaillierter dargestellt. Insbesondere handelt es sich dabei um eine Messanordnung, wie sie beispielsweise in der US-A-4,645,350 beschrieben ist. Aus der schematischen Darstellung ist ersichtlich, dass das Filterrad 43 spektrale Filter aufweist, die wie dargestellt, beispielsweise eine Analyse einer Vorlage P in den drei Grundfarben Rot R, Grün G und Blau B erlauben. Durch Rotation des Filterrades 43 um die Achse 46 werden die unterschiedlichen Farbfilter in den Strahlengang der Messlichtquelle 42 eingeschwenkt. Ebenfalls angedeutet in Fig. 3 sind eine Ausgabeeinheit 17 für die ermittelten photometrischen Daten und eine Eingabeeinheit 18 für die Übermittlung von Eingabeinformationen an die Auswerteeinheit 16.

In dem in den Figs. 1 und 4-7 dargestellten Ausführungsbeispiel der Erfindung ist die Auswerteeinheit 16 eine unterhalb der Transportebene T innerhalb des Gehäuses angeordnete Platine, die mit entsprechenden diskreten und integrierten Schaltkreisen und anderen elektronischen Bauelementen bestückt ist.

Die in den Fig. 1, 4 und 6 dargestellte Vorrichtung 1 ist für den Durchlauf der Vorlagen P durch das Gerät ausgebildet. Dazu weist sie an der dem Einzugsspalt 3 gegenüberliegenden Seite des Gehäuses 2 einen Ausgabespalt 10 auf, durch den die Vorlagen P wieder aus dem Gerät 1 ausgestossen werden. In einer anderen Ausführungsvariante der Vorrichtung könnte diese auch für die Integration in andere Anlagen, beispielsweise einen fotografischen Printer, ausgelegt sein. Dabei wird üblicherweise eine Vorlage P nach dem Ausmessen der darauf enthaltenen Messfelder durch den Eingangsspalt 3 wiederausgestossen. Es versteht sich, dass dazu die Transporteinrichtung 6, 7 in umgekehrter Richtung betreibbar sein muss.

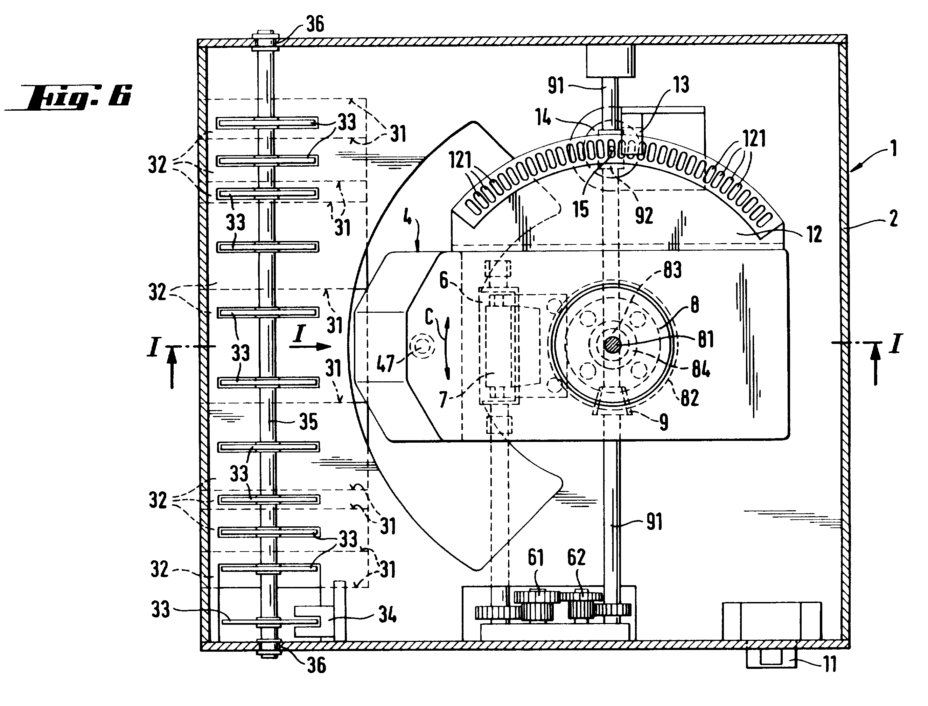

Es kann auch noch, wie in den Fig. 1 und 6 angedeutet eine Anschlussbuchse 11 vorgesehen sein. Diese Anschlussbuchse 11 ist für die Aufnahme eines Steckers zur Stromversorgung und für den Datenaustausch ausgebildet. Auf diese Weise kann die Vorrichtung in bestehende Steuerungssysteme integriert werden. Auf diese Weise kann auch ein externes Datenendgerät mit der in der Vorrichtung vorgesehenen Auswerteeinheit 16 kommunizieren.

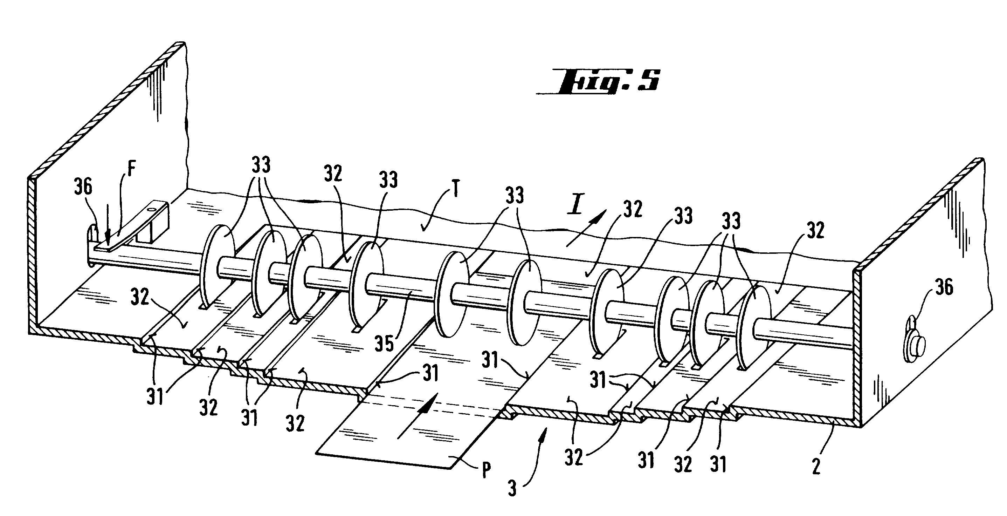

Der Unterschied der erfindungsgemässen Vorrichtung zu dem aus der US-A-5,118,183 als nächster Stand der Technik bekannten Gerät besteht darin, dass die Remissions-Messoptik 51 und die von der Transporteinrichtung 6,7 erfasste Vorlage P relativ zueinander quer zur Einzugsrichtung I (Fig. 5) der Vorlage P bewegbar sind. Auf diese Weise können auch benachbarte Messfeldkolonnen einer Vorlage P ausgemessen werden, ohne die Vorlage zwischen den einzelnen Messungen neu positionieren zu müssen. Die Beschränkung der Relativverschiebbarkeit auf die Remissions-Messoptik ist darauf zurückzuführen, dass im allgemeinen nur die opaken Vorlagen, beispielsweise Papier-Teststreifen, mehrere nebeneinander angeordnete Messfeldkolonnen aufweisen. Bei transparenten Vorlagen, beispielsweise bei Film-Teststreifen, sind die Messfelder in immer nur einer Kolonne angeordnet, die überdies genau symmetrisch zur Mittenspur der Vorlage vorliegen. Es versteht sich jedoch, dass selbstverständlich auch die Transmission-Messoptik gegenüber der Vorlage relativverschiebbar sein kann, um auch die Möglichkeit zu haben, transparente Vorlagen mit mehreren nebeneinander angeordneten Messfeldkolonnen auf vorteilhafte Weise auszumessen. Da derartige Vorlagen praktisch nicht existieren, besitzt eine derartige Vorrichtungs-Variante nur von theoretischen Wert. Die fogenden Ausführungen beschränken sich daher auf eine Vorrichtung, bei der bloss die Remissions-Messoptik 51 und die von der Transporteinrichtung 6,7 erfasste Vorlage P relativ zueinander quer zur Einzugsrichtung I (Fig. 5) der Vorlage P bewegbar sind.

In einer besonders bevorzugten Ausführungsvariante der Erfindung, die überdies auch verhältnismässig einfach zu realisieren ist, ist die Remissions-Messoptik 41 gegenüber der auszumessenden Vorlage P aus einer Ausgangsstellung querverschiebbar, insbesondere um eine Schwenkachse verschwenkbar. Dabei beschreibt die Lichteintrittsblende der Remissions-Messoptik 41 einen Kreisbogen, der in einer zur Transportbahn T parallelen Ebene liegt. Die Lichteintrittsblende 47 der Remissions-Messoptik 41 befindet sich üblicherweise nur eine kurze Entfernung oberhalb der Transportebene T. Der Abstand zwischen der Unterkante der Lichteintrittblende 47 und der Transportebene ist dabei durch die Anordnung der Lichtblende 47 in der Remissions-Messanordnung 4 gegeben. Vorzugsweise wird darauf geachtet, dass ein möglichst kleiner Abstand eingestellt ist, einerseits um möglichst viel des von der Vorlage remittierten Lichts zu erfassen und andererseits um den Eintritt von Streulicht zu vermeiden.

Als Ausgangsstellung der Remissions-Messoptik 41 wird diejenige Position definiert, in der die Lichtquelle 42 der Remissions-Messoptik genau über der Transmissions-Messoptik 51 angeordnet ist. Dazu wird während des Verschwenkens der Remissions-Messoptik 41 mit Hilfe der Transmissions-Messoptik 51 eine Intensitätsmessung durchgeführt. Diejenige Stellung der Remissions-Messoptik 41, in der die Lichtquelle 42 genau über der Transmissions-Messoptik 51 angeordnet ist und an der die Transmissions-Messoptik 51 maximale Intensität misst, wird als Ausgangstellung definiert. Für den Fall, dass eine Vorrichtung 1 ohne Transmissions-Messanordnung vorliegt, kann die Ausgangsstellung der Remissions-Messoptik 41 durch maximales Verschwenken bis zu den beiden Extremstellungen aufgefunden werden. Die Extremstellungen sind durch Anschläge rechts und links vorgegeben. Als Ausgangsstellung der Remissions-Messoptik 41 kann dann beispielsweise die Mittenstellung der Remissions-Messoptik 41 zwischen den beiden Extremstellungen definiert werden.

Die Schwenkachse der Remissions-Messoptik 41 ist in vorteilhafter Weise zugleich die Antriebsachse 81 des Elektromotors 8 für das Filterrad 43, welche beide in der Remissions-Messanordnung 4 angeordnet sind. Dabei wird die Rotationsachse 46 des Filterrads 42 von einem Transmissionsriemen oder ähnlichen kraftübertragenden Mitteln angetrieben. Das Verschwenken der Remissions-Messoptik 41 kann somit mit Hilfe des Antriebsmotors 8 für das Filterrad 43 ausgeführt werden. Die Antriebsachse 81 des Elektromotors 8 trägt an seinem der Transportebene T zugekehrten Ende ein Kegelrad-Zahnrad 82, dessen Verzahnung in die Verzahnung eines zweiten Kegelrad-Zahnrads 9 eingreift, das starr auf einer Welle 91 sitzt. Zugleich stützt sich die Antriebsachse 81 in einer speziellen Lagerbuchse 84 ab, die gleichzeitig eine gelagerte Durchführung für Antriebswelle aufweist. Auf diese Weise ist einerseits eine Abstützung der Antriebsachse 81 und der Welle 91 gegeben, und andererseits ein ungehindertes Rotieren der Welle 91 und der Antriebsachse 81 gewährleistet. Zwischenzahnräder 61, 62 übertragen die Antriebskraft vom zweiten Kegelrad-Zahnrad 9 auf die Transporteinrichtung 6,7, die im vorliegenden Ausführungsbeispiel der Erfindung von einer angetriebenen Papierantriebs-Rolle 6 und von einer Gegendruck-Rolle 7 gebildet werden. Eine Vorlage P, die durch den Eingabespalt 3 eingeschoben wird, gelangt in den Bereich zwischen den beiden Rollen 6,7 und wird von ihnen erfasst und weitertransportiert. Auf diese Weise auch die Transporteinrichtung 6,7 für die Vorlage P mit dem Antriebsmotor 8 für das Filterrad 43 gekoppelt.

Die Rollen 6,7 der Transporteinrichtung sind bezogen auf die Einzugsrichtung I (Fig. 5) der Vorlage P in die Vorrichtung 1 eine kurze Strecke hinter der Remissions-Messoptik 51, insbesondere hinter deren Eingangsblende 47 angeordnet. Dadurch ist sichergestellt, dass die Vorlage immer noch von den Transportrollen 6,7 gehalten wird, wenn im hinteren Endbereich einer Vorlage angeordneten Messfelder ausgemessen werden müssen. Der Abstand der Transportrollen 6,7 von der Eingangsblende 47 der Remissions-Messoptik 41 beträgt etwa 15 mm bis etwa 35 mm, vorzugsweise etwa 25 mm. Auf diese Weise ist gewährleistet, dass auch Messfelder im Bereich des Vorderendes der Vorlage P ausgemessen werden können, wenn das Vorderende der Vorlage P von den Transportrollen 6,7 erfasst worden ist.

Oberhalb der Lagerbuchse 84 ist an der Antriebsachse 81 ein weiteres Lager 83 vorgesehen, welches das ungehinderte Verschwenken der Remissions-Messoptik 41, bzw. im dargestellten Ausführungsbeispiel der gesamten Remissions-Messanordnung 4 um die Antriebsachse 81 ermöglicht. Für das Verschwenken der Remissions-Messoptik 41 bzw. der gesamten Messanordnung 4 wird die Tatsache ausgenutzt, dass bei der Rotation der Antriebswelle 81 des Elektromotors 8 der Stator des Motors, der über das Motorengehäuse fest mit der Messanordnung 4 verbunden ist, dazu tendiert, gemäss dem Satz von der Erhaltung des Drehimpulses in entgegengesetzte Richtung zu rotieren. Da die Messanordnung 4 wegen des Drehlagers 83 um die Antriebsachse 81 drehbar ist, resultiert daraus eine Tendenz zur Verschwenkung der Messanordnung 4 in zur Umdrehungsrichtung der Antriebswelle 81 entgegengesetztem Sinn.

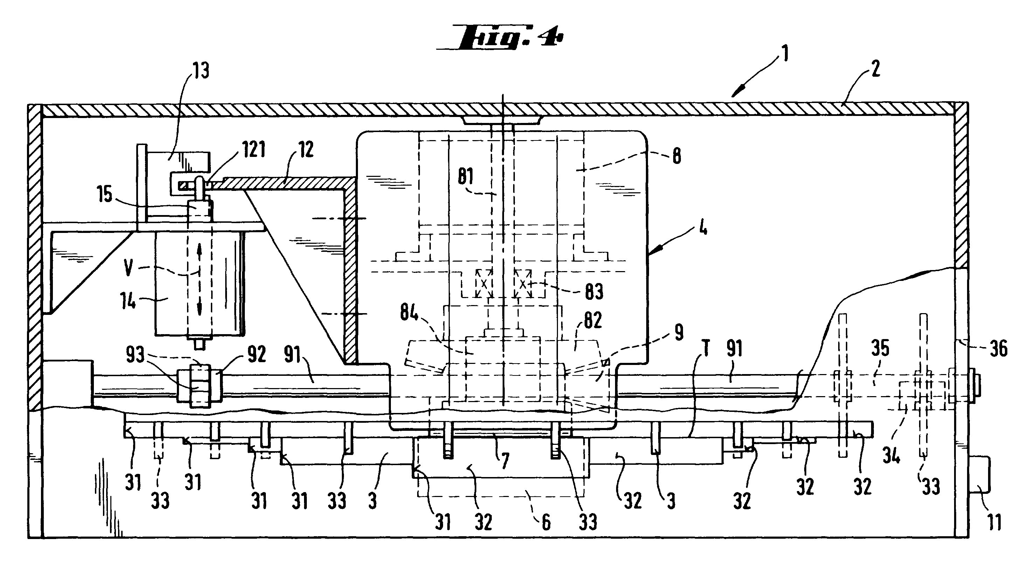

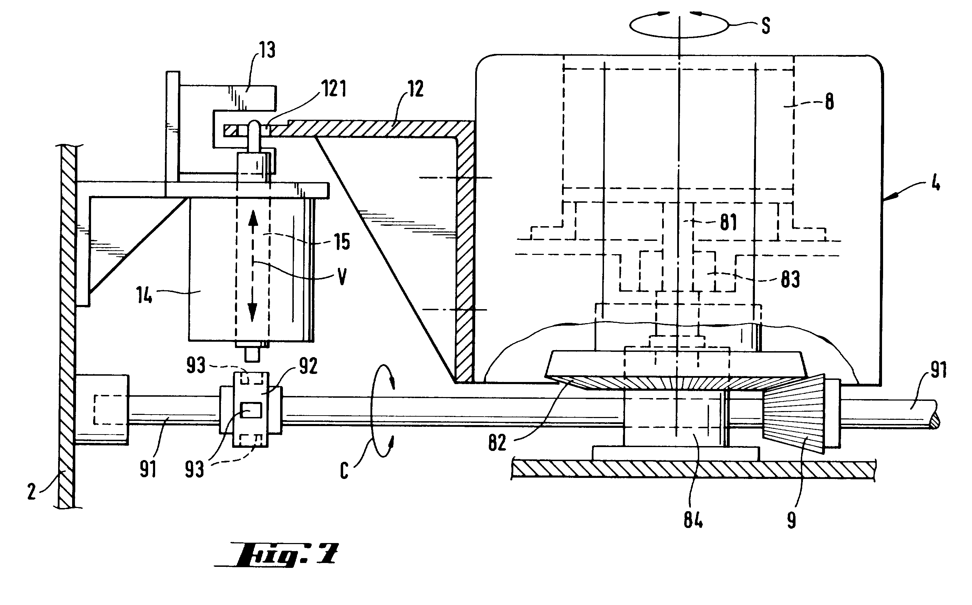

Da diese Tendenz zum Verschwenken der Messanordnung 4 dem Systemaufbau inherent ist, muss gewährleistet werden, dass ein Verschwenken nur dann eintritt wenn es beabsichtigt ist und dass im Falle eines Verschwenkens dieses kontrolliert abläuft. Das heisst es müssen Vorkehrungen getroffen werden, um das Ausmass des Verschwenkens, das heisst den Verschwenkwinkel steuern zu können. In den Fig. 4, 6 und 7 ist ein Ausführungsbeispiel der konstruktiven Massnahmen zur Kontrolle des Verschwenkens der Remissions-Messanordnung schematisch dargestellt. Aus Fig.7 ist ersichtlich, dass die Messanordnung 4 mit einer Einrichtung 12 ausgestattet ist, die im Zusammenwirken mit Verriegelungselementen 14,15 ein unbeabsichtigtes Verschwenken der Messanordnung 4 verhindert. Insbesondere handelt es sich dabei um ein kreisbogenförmig ausgebildetes Leitstück 12, dass an der Messanordnung 4 befestigt ist. Das Leitstück 12 ist beispielsweise ein Blechstück. Die Krümmung des Leitstückes 12 und seine Anordnung an der Messanordnung 4 ist dabei derart gewählt, dass die Antriebsachse 81 des Elektromotors 8, die ja das Drehzentrum der Messanordnung 4 bildet, zugleich Zentrum des Kreisbogens ist, der durch das Leitstück 12 festgelegt ist. Das Leitstück weist eine Reihe etwa länglich ausgebildete Löcher 121 auf, die rasterförmig in gleichförmigem Abstand angeordnet sind. Die Rasterlöcher 121 sind für den Eingriff einer Klinke 15 ausgebildet, die durch Aktivieren eines unterhalb des Leitstücks 12 angeordneten Hubmagnets 14 ein- und ausgefahren werden kann. Auf diese Weise kann das Verschwenken der Remissions-Messanordnung 4 einfach durch Einfahren der Klinke 15 in ein Rasterloch 121 unterbunden werden.

Die Steuerung des Schwenkwinkels erfolgt, wie in Fig. 4 beispielsweise dargestellt, mit Hilfe einer Gabel-Lichtschranke 13 konventioneller Bauart. Die Gabel-Lichtschranke 13 detektiert die Anzahl von Rasterlöchern 121 die beim Verschwenken der Messanordnung 4 aus der Ausgangsstellung an ihr vorbeibewegt werden. Da die Rasterlöcher 121 in gleichmässigen Abständen angeordnet sind, kann aus der Anzahl der detektierten Rasterlöcher 121 auf den Drehwinkel zurückgeschlossen werden. In der Praxis ist in der Auswerteeinheit 16 ein bestimmter Schwenkwinkel, der beispielsweise zuvor über eine Eingabeeinheit vorgegeben worden ist, festgelegt. Bei Erreichen des gewünschten Schwenkwinkels wird der Hubmagnet 14 aktiviert, und wird die Klinke 15 in das darüber befindliche Rasterloch 121 eingefahren, um auf diese Weise die Remissions-Messanordnung gegen ein weiteres Verschwenken zu sichern.

Um ein sicheres Ansteuern einer gewünschten Position auf der Vorlage P zu gewährleisten, muss auch sichergestellt sein, dass die Vorlage P während des Verschwenkens der Remissions-Messoptik 41 bzw. der Messanordnung 4 in Ruhe ist. Da die Vorlage P von der Transporteinrichtung 6,7 erfasst ist, muss dafür gesorgt werden, dass diese sich während des Verschwenkens nicht bewegen können. Zu diesem Zweck ist auf der Welle 91 etwa unterhalb des Hubmagnets 14 ein Rasterrad 92 angeordnet und starr mit der Welle 91 verbunden. Das Rasterrad 92 weist eine Anzahl von Vertiefungen 93 auf, die in regelmässigem Abstand in der Stirnfläche des Rasterrades 92 angeordnet sind. Die Vertiefungen 93 sind derart angeordnet, dass die Klinke 15 des Hubmagnets 14 bei freigegebenem Rasterloch, das heisst wenn die Remissions-Messanordnung zum Verschwenken freigegeben ist, nach unten in eine der Vertiefungen 93 des Rasterrades 92 stösst und auf diese Weise die Welle 91 und damit die Transporteinrichtung 6,7 für die Vorlage P arretiert. Die Anzahl der Vertiefungen 93 in dem Rasterrad 92 ist an sich beliebig, vorzugsweise sind vier Vertiefungen 93 vorgesehen.

Mit Hilfe des kreisbogenförmigen Leitstücks 12 mit den Rasterlöchern 121, des Rasterrads 92 auf der Welle 91 mit den Vertiefungen 93 und des Hubmagnets 14 mit der Klinke 15 ist gewährleistet, dass immer entweder die Remissions-Messanordnung 4 oder die Transporteinrichtung 6,7 und damit die Vorlage P arretiert ist. Durch das Auf- und Abbewegen der Klinke 15 gemäss dem Doppelpfeil V in Fig. 7 wird entweder die Remissions-Messanordnung 4 am Verschwenken gemäss dem Doppelpfeil S in Fig. 7 gehindert, oder wird die Achse 91 gegen eine Rotation gemäss dem Doppelpfeil C in Fig. 7 arretiert und damit die Transporteinrichtung 6,7 blockiert.

Die Eingangsseite der erfindungsgemässen Vorrichtung 1 ist in den Fig. 1 und 6 jeweils im linken Bildteil bzw. in Fig. 4 und 5 gesondert dargestellt. Der Einzugsspalt 3 ist etwa horizontal orientiert. Wenigstens auf einer Seite des Einzugsspaltes ist zumindest ein Anschlag 31 für die Vorlagen vorgesehen. Bei dem dargestellten Ausführungsbeispiel sind mehrere Anschläge 31 für unterschiedlich breite Vorlagen P vorgesehen, die zu beiden Seiten der Mitte des Einzugsspalts 3 angeordnet sind. Insbesondere sind, wie in Fig. 4 dargestellt, fünf Anschläge 31 auf jeder Seite vorgesehen. Dabei sind immer die von der Mitte des Einzugsspalts 3 aus gezählten Anschläge 31 mit der gleichen Zahl zusammengehörig und auf die Breite der zu führenden Vorlage P abgestimmt. Die Anschläge 31 sind vorzugsweise für 35 mm, 3,5 Zoll, 4 Zoll, 5 Zoll und 6 Zoll breite Vorlagen P ausgelegt. Dabei ist das 35 mm Format für transparente Film-Teststreifen gedacht, während die anderen Formate sich auf die gängigen Formate von Fotopapier-Teststreifen beziehen. Die Anordnung der Anschläge 31 ist dabei derart gewählt, dass die jeweils innen liegenden Anschläge 31 für schmälere Vorlagen P auf einem tieferen Niveau angeordnet sind als die jeweils benachbarten. Auf jedem Niveau führt eine Vorlagenführung 32 beginnend von den zugehörigen Anschlägen rampenartig in das Innere der Vorrichtung 1 bis auf das Niveau der Transportebene T. Während im dargestellten Ausführungsbeispiel immer jeweils beidseitig Anschläge 31 für die Längskanten der zu führenden Vorlage P vorgesehen sind, versteht es sich, dass die Anschläge 31 auch jeweils nur auf einer Seite des Einzugsspalts 3 angeordnet sein können.

Unmittelbar hinter dem Einzugsspalt 3 sind Niederhalterollen 33 oder ähnliche bewegbare Vorlagenhaltemittel angeordnet. Die Niederhalterollen 33 sind auf einer gemeinsamen Achse 35 derart angeordnet, dass jeweils wenigstens zwei Rollen auf der zugehörigen rampenartigen Vorlagenführung 32 aufliegt. Die Achse 35 ist zu beiden Seiten des Einzugsspalts 3 in jeweils einem vertikalen Langloch 36 gelagert und höhenverschiebbar. Insbesondere ist sie, und damit die Niederhalterollen, gegen die Schwerkraft oder gegen die Federkraft einer Niederhaltefeder F aus ihrer Ruheleage bewegbar. Auf diese Weise wird eine Vorlage P, die durch den Einzugsspalt 3 eingeschoben wird, zwischen der jeweiligen Rampe 32 und den zugehörigen Niederhalterollen 33 eingeklemmt und gegen Herausfallen gesichert. Beim weiteren Vorschieben der Vorlage P in das Innere der Vorrichtung 1 drehen sich die Niederhalterollen 33 und halten die Vorlage P flach gegen die rampenartige Vorlagenführung 32 gepresst.

Die Niederhalterollen 33 sind im vorliegenden Ausführungsbeispiel (Figs. 1 und 6) mit länglichen radialen Öffnungen versehen, die mit einer Gabel-Lichtschranke 34 zusammenwirken. Beim Verdrehen der Niederhalterollen 32 wird die Lichtschranke 34 unterbrochen bzw. freigegeben, und wird auf diese Weise die Anwesenheit einer Vorlage P in der Vorrichtung detektiert. Diese Information kann beispielsweise dazu benützt werden, die Transportmittel 6,7 der Vorrichtung 1 und die gesamte Messanordnung 4,5 zu aktivieren. Anstelle der Gabel-Lichtschranke 34 kann aber auch ein anderer Sensor hinter dem Einzugsspalt vorgesehen sein, der auf optische oder mechanische Weise detektiert, dass eine Vorlage P in die Vorrichtung 1 eingeschoben wird.

Eine Vorlage P einer bestimmten genormten Breite, beispielsweise ein opaker Papier-Teststreifen zur Überprüfung der Grundeinstellung des fotografischen Printers, soll durch den horizontal angeordneten Einzugsspalt 3 in die erfindungsgemässe Vorrichtung 1 eingeschoben werden. Dabei wird die üblicherweise streifenförmige Vorlage an den zugehörigen Anschlägen 31 angelegt und an beiden Längskanten geführt. Das Vorderende der Vorlage P wird die rampenartige Vorlagenführung 32 empor in den Einzugsspalt 3 eingeschoben. Sie wird zwischen den Niederhalterollen 33 und der Vorlagenführung 32 eingeklemmt. Beim weiteren Vorschieben der Vorlage P beginnen sich die Niederhalterollen 33 zu drehen. Die Drehung der Niederhalterollen 33 wird von der Gabel-Lichtschranke 34 detektiert und die Vorrichtung 1 aktiviert. Dies betrifft insbesondere die Transporteinrichtung 6,7 für die Vorlage P und die Messanordnungen 4,5. Die Vorlage P wird solange manuell vorgeschoben, bis sie von den Transportrollen 6,7 erfasst worden ist. Von diesem Augenblick an bis zum Wiederausstossen der Vorlage wird diese in der Vorrichtung 1 automatisch transportiert.

Das Ausmessen der Messfelder der opaken Vorlage P erfolgt mit Hilfe der Remissions-Messanordnung 4. Im Falle einer transparenten Vorlage P, beispielsweise eines Film-Teststreifens, erfolgt das Ausmessen mit der Transmissions-Messanordnung 5.

Zunächst wird die Ausgangsstellung der verschwenkbaren Remissions-Messanordnung 4 bestimmt. Praktischerweise erfolgt dies noch bevor die Vorlage P von den Transportrollen 6,7 erfasst ist. Dazu wird die Remissions-Messanordnung 5 solange verschwenkt, bis die Transmissions-Messanordnung maximale Lichtintensität detektiert. In diesem Fall ist die Lichtquelle 42 der Remissions-Messoptik 41 direkt über der Transmissions-Messoptik 51 angeordnet. In dieser Stellung wird die Remissions-Messanordnung 4 zunächst verriegelt. Nachdem die Vorlage P von den Transportrollen 6,7 erfasst worden ist, wird die Vorlage P in einer vorgegebenen longitudinalen Schrittweite, beispielsweise alle 5 mm, ausgemessen. Die Vorlage P wird dabei mit Hilfe der Filter im Filterrad in den drei Grundfarben Rot, Grün und Blau analysiert. Die gemessenen Remissionswerte werden an die Auswerteelektronik 16 weitergeleitet. In der Auswerteelektronik 16 werden die erfassten Messwerte sodann nach dem Prinzip der Kreuzkorrelation mit Vorgabedaten verglichen. Die Vorgabedaten betreffen die Anordnung der Messflecke auf der genormten Vorlage und die spektralen Solldaten der Messflecke und wurden zuvor in eine Speichereinheit der Auswerteelektronik 16 eingegeben. Die Messwerte werden solange mit den Vorgabedaten verglichen, bis optimale Übereinstimmung erzielt worden ist. Nach dem Ausmessen der ersten Messfeldkolonne, welche üblicherweise etwa in der Mitte der streifenförmigen Vorlage angeordnet ist, wird die Transporteinrichtung 6,7 arretiert. Nun wird die Remissions-Messanordnung 4 gemäss den Vorgaben der genormten Vorlage derart verschwenkt, dass eine benachbarte Messfeldkolonne unter der Remissions-Messoptik 4 angeordnet ist. Das Ausmessen der Messfelder der benachbarten Kolonne erfolgt wiederum schrittweise, vorzugsweise während des Transports der Vorlage P in zur Einzugsrichtung entgegengesetzter Richtung. Nach Abschluss dieser Messung wird die Remsissions-Messanordnung gegebenenfalls neuerlich verschwenkt und wiederum während ihres Transports in umgekehrter Richtung ausgemessen usf. Die erfassten Messwerte werden sodann von der Auswerteelektronik 16 ausgewertet, und die gesuchten spektralen Daten in irgendeiner Form, beispielsweise via Bildschirm oder Drucker, dem Anwender mitgeteilt.

Die erfindungsgemässe Vorrichtung und das erfindungsgemässe Verfahren zur Erfassung von auf einer blatt- oder streifenartigen Vorlage neben- und/oder hintereinander angeordneten photometrischen Daten reduzieren den Aufwand für das richtige Positionieren des Teststreifens beträchtlich. Der Operator muss nicht mehr entscheiden, ob und in welchem Ausmass ein Teststreifen seitlich versetzt eingegeben werden soll. Die Vorrichtung erlaubt es, benachbarte Messfeldkolonnen auszumessen, ohne dass der Teststreifen für jede Messfeldkolonne neu ausgerichtet werden muss. Benachbarte Messfeldkolonnen können auch dann ausgemessen werden, wenn der Teststreifen von der in der Vorrichtung angeordneten Transporteinrichtung erfasst ist. Zudem können mit der Vorrichtung unterschiedlich breite und/oder lange Teststreifen mit unterschiedlicher Anordnung der Messfelder fehlerfrei ausgemessen werden.

## Patentansprüche

1. Vorrichtung zur Erfassung von auf einer blatt- oder streifenartigen Vorlage neben- und/oder hintereinander angeordneten photometrischen Daten, umfassend ein Gehäuse (2) mit einem Einzugsspalt (3), der zumindest einseitig wenigstens einen Anschlag (31) für die Vorlagen (P) aufweist, eine innerhalb des Gehäuses (2) angeordnete Transporteinrichtung (6,7) für den automatischen Einzug der Vorlage (P) entlang einer Transportbahn (T) in das Gehäuseinnere, wenigstens eine Remissions-Messanordnung (4) für opake Vorlagen (P), die in Bezug auf die Einzugsrichtung (I) der Vorlage (P) vorzugsweise vor der Transporteinrichtung (6,7) im Gehäuseinneren angeordnet ist und während des Einzugs der Vorlage (P) in das Gehäuseinnere von dieser passiert werden, und mit einer Auswerteeinheit (16) verbunden ist, sowie eine wellenlängendispersive Anordnung (43), welche zumindest eine Ausmessung der Vorlage (P) in den drei Grundfarben Rot, Grün und Blau ermöglicht, wobei jeder Anschlag (31) in Bezug auf den Einzugsspalt (3) für die Vorlagen (P) ortsfest angeordnet ist, dadurch gekennzeichnet, dass die Remissions-Messoptik (4) und die von der Transporteinrichtung (6,7) erfasste Vorlage (P) relativ zueinander quer zur Einzugsrichtung (I) der Vorlage (P) bewegbar sind.

2. Vorrichtung gemäss Anspruch 1, dadurch gekennzeichnet, dass sie zusätzlich eine Transmissions-Messanordnung (5) aufweist, und dass die Remissions-Messanordnung (4) mit ihrer Remissions-Messoptik (41) oberhalb der Transportbahn (T) der Vorlage (P) angeordnet ist, während die Transmissions-Messanordnung (5) mit ihrer Transmissions-Messanordnung (51) unterhalb der Transportbahn (T) angeordnet ist.

3. Vorrichtung gemäss Anspruch 1 oder 2, dadurch gekennzeichnet, dass die Remissions-Messoptik (41) aus einer Ausgangsstellung quer zur Einzugsrichtung (I) der Vorlage (P) bewegbar ist.

4. Vorrichtung gemäss Anspruch 3, dadurch gekennzeichnet, dass die Remissions-Messoptik (41) gegenüber der Ausgangsstellung verschwenkbar ist, und dass der Kreisbogen, den eine Lichteintrittsblende (47) der Remissions-Messoptik (41) beim Verschwenken beschreibt, in einer zur Transportbahn (T) parallelen Ebene liegt.

5. Vorrichtung nach Anspruch 3 oder 4, dadurch gekennzeichnet, dass in der Ausgangsstellung der Remissions-Messoptik (41) die Lampe (42) der Remissions-Messoptik (41) genau über der Transmissions-Messoptik (51) der Transmissions-Messanordnung (5) angeornet ist.

6. Vorrichtung nach Anspruch 4 oder 5, dadurch gekennzeichnet, dass die wellenlängendispersive Anordnung (43) ein Filterrad ist, welches von einem Elektromotor (8) antreibbar ist, und dass die Remissions-Messoptik (41) mit Hilfe des Antriebsmotors (8) für das Filterrad (43) verschwenkbar ist.

7. Vorrichtung nach Anspruch 6, dadurch gekennzeichnet, dass die Transporteinrichtung (6,7) für den automatischen Einzug der Vorlage (P) zumindest ein Rollen- oder Walzenpaar umfasst, welches, bezogen auf die Einzugsrichtung (I), in kurzem Abstand, beispielsweise in einem Abstand von etwa 15 mm bis 35 mm, vorzugsweise etwa 25 mm, hinter der Remissions-Messoptik (41) angeordnet ist, und wobei eine der Rollen oder Walzen durch den Antriebsmotor (8) des Filterrads (43) antreibbar ist.

8. Vorrichtung nach Anspruch 7, dadurch gekennzeichnet, dass die Remissions-Messoptik (41) und die Transporteinrichtung (6,7) arretierbar sind, und dass eine entsprechende Arretiereinrichtung (12,121,13,14,92,93) vorgesehen ist, mittels der immer entweder die Remissions-Messoptik (41) gegen Verschwenken oder die Transporteinrichtung (6,7) arretiert sind.

9. Vorrichtung nach einem der vorangehenden Ansprüche, dadurch gekennzeichnet, dass der Einzugsspalt (3) etwa horizontal orientiert ist und wenigstens einseitig mehrere, vorzugsweise fünf, Anschläge (31) für unterschiedlich breite Vorlagen (P) aufweist, welche derart angeordnet sind, dass jeweils der Anschlag für die schmälere Vorlage (P) der Einzugsspaltmitte näher liegt als der jeweils benachbarte breitere Anschlag, und dass die Anschläge für schmälere Vorlagen (P) auf einem tieferen Niveau angeordnet sind als die benachbarten Anschläge für breitere Vorlagen, wobei jeweils eine Vorlagenführung (32) vorgesehen ist, die vom Anschlag (31) rampenartig bis auf das Niveau der Transportbahn (T) ansteigt.

10. Vorrichtung nach Anspruch 9, dadurch gekennzeichnet, dass zu beiden Seiten der Einzugsspaltmitte Anschläge (31) derart vorgesehen sind, dass jede Vorlage (P) zu beiden Längsseiten an einem Anschlag (31) anliegt.

11. Vorrichtung nach Anspruch 9 oder 10, dadurch gekennzeichnet, dass unmittelbar hinter dem Einzugsspalt (3) Niederhalterollen (33) oder ähnliche bewegbare Vorlagenhaltemittel angeordnet sind, welche gegen die Schwerkraft oder eine Federkraft aus ihrer Ruhelage bewegbar sind, in der sie auf der jeweiligen Vorlagenführung (32) aufliegen.

12. Vorrichtung nach einem der vorangehenden Ansprüche, dadurch gekennzeichnet, dass hinter dem Einzugsspalt (3) ein Sensor (34) angeordnet ist, der die Anwesenheit einer Vorlage (P) im Einzugsspalt (3) detektiert und bei Anwesenheit einer Vorlage (P) die Vorrichtung (1) aktiviert.

13. Vorrichtung nach Anspruch 11 und 12, dadurch gekennzeichnet, dass der Sensor (34) eine Rotationssensor ist, der die Drehung der Niederhalterollen (33) detektiert.

14. Vorrichtung nach einem der vorangehenden Ansprüche, dadurch gekennzeichnet, dass sie als "stand-alone" Gerät konzipiert ist, und dass an der dem Einzugsspalt (3) gegenüberliegenden Seite des Gerätes (1) ein Ausgabespalt (10) für die Vorlagen (P) angeordnet ist.

15. Vorrichtung nach einem der Ansprüche 1-13, dadurch gekennzeichnet, dass sie in andere Anlagen, beispielsweise einen fotografischen Printer, integriert ist, und dass die Transporteinrichtung (6,7) für die Vorlagen (P) nach dem Ausmessen der Messfelder in umgekehrter Richtung derart betreibbar ist, dass die Vorlagen (P) durch den Einzugsspalt (3) wieder ausgestossen werden.

16. Verfahren zur Erfassung von auf einer blatt- oder streifenartigen Vorlage neben- und/oder hintereinander angeordneten photometrischen Daten, bei dem eine blatt- oder streifenartige Vorlage (P) mit neben- und/oder hintereinander angeordneten Messfeldern durch einen Einzugsspalt (3), der zumindest einseitig wenigstens einen Anschlag (31) für die Vorlagen (P) aufweist, einer innerhalb eines Gehäuses (2) angeordneten Transporteinrichtung (6,7) zugeführt wird, welche die Vorlage (P) automatisch entlang einer Transportbahn (T) in das Gehäuseinnere einzieht und an einer Remissions-Messanordnung (4) mit einer Remissions-Messoptik (41) für opake Vorlagen (P) vorbeiführt, welche in Bezug auf die Einzugsrichtung (I) der Vorlage (P) vorzugsweise vor der Transporteinrichtung (6,7) im Gehäuseinneren angeordnet ist und mit einer Auswerteelektronik (16) verbunden ist, wobei die opaken Vorlagen (P) von der Remissions-Messanordnung (4) ausgemessen werden und mit Hilfe einer wellenlängendispersiven Anordnung (43) zumindest in den drei Grundfarben Rot, Grün und Blau analysiert werden, und die erfassten Messdaten an die Auswerteelektronik (16) zur weiteren Verarbeitung weitergeleitet werden, wobei jeder Anschlag (31) in Bezug auf den Einzugsspalt (3) für die Vorlagen (P) ortsfest angeordnet ist, dadurch gekennzeichnet, dass die Remissions-Messoptik (41) und die von der Transporteinrichtung (6,7) erfasste Vorlage (P) relativ zueinander quer zur Einzugsrichtung (I) bewegt werden, um die nebeneinander angeordneten Messfelder anzusteuern.

17. Verfahren nach Anspruch 16, dadurch gekennzeichnet, dass transparente Vorlagen (P) mit Hilfe einer Transmissions-Messanordnung (5) mit einer Transmissions-Messoptik (51) ausgemessen werden und analog zur Vorgangsweise bei opaken Vorlagen zumindest in den drei Grundfarben Rot, Blau und Grün analysiert werden.

18. Verfahren nach Anspruch 17, dadurch gekennzeichnet, dass die Remissions-Messoptik (41) aus einer Ausgangsstellung gegenüber der Vorlage (P) querbewegt, vorzugsweise verschwenkt, wird.

19. Verfahren nach Anspruch 18, dadurch gekennzeichnet, dass die Ausgangsstellung der Remissions-Messoptik (41) ohne Vorlage (P) bestimmt wird, indem während des Verschwenkens der Remissions-Messoptik (41) mit Hilfe der Transmissions-Messanordnung (5) eine Intensitätsmessung durchgeführt wird, und diejenige Stellung der Remisions-Messoptik (41), an der von der Transmissions-Messanordnung (5) maximale Intensität gemessen wird, als Ausgangsstellung definiert wird.

20. Verfahren nach einem der Ansprüche 16-19, dadurch gekennzeichnet, dass die wellenlängendispersive Anordnung (43) ein Filterrad ist, welches von einem Elektromotor (8) angetrieben wird.

21. Verfahren nach Anspruch 20, dadurch gekennzeichnet, dass die Remissions-Messoptik (41) und die Transportmittel (6,7) für die Vorlage (P) von dem Antriebsmotor (8) für das Filterrad (43) angetrieben werden, wobei sichergestellt ist, dass immer nur entweder die Transportmittel (6,7) für die Vorlage (P) oder die Remissions-Messoptik (41) bewegt werden, sodass die Remissions-Messoptik (41) nur dann relativ zur Vorlage (P) querbewegt wird, wenn die Vorlage (P) ruht und umgekehrt.

22. Verfahren nach einem der Ansprüche 16-21, dadurch gekennzeichnet, dass die Vorlagen (P) dem Einzugsspalt (3) etwa horizontal ausgerichtet zugeführt werden, und wenigstens einseitig mehrere, vorzugsweise fünf, Anschläge (31) für unterschiedlich breite Vorlagen (P) vorgesehen sind, welche derart angeordnet sind, dass jeweils der Anschlag für die schmälere Vorlage der Einzugsspaltmitte näher liegt als der jeweils benachbarte breitere Anschlag, und dass die Anschläge für schmälere Vorlagen auf einem tieferen Niveau angeordnet sind als die benachbarten Anschläge für breitere Vorlagen, wobei die Vorlagen vom jeweiligen Anschlag über eine rampenartige Vorlagenführung (32) bis auf das Niveau der Transportbahn (T) innerhalb der Vorrichtung (1) vorbewegt werden.

23. Verfahren nach Anspruch 22, dadurch gekennzeichnet, dass zu beiden Seiten der Einzugsspaltmitte Anschläge (31) derart vorgesehen sind, dass jede Vorlage (P) zu beiden Längsseiten von einem Anschlag (31) geführt wird.

24. Verfahren nach einem der Ansprüche 16-23, dadurch gekennzeichnet, dass die Vorlagen (P) unter Niederhalterollen (33) oder ähnlichen bewegbaren Vorlagenhaltemitteln hindurchbewegt werden, welche unmittelbar hinter dem Einzugsspalt (3) angeordnet sind und gegen die Schwerkraft oder eine Federkraft aus ihrer Ruhelage bewegbar sind, in der sie auf der jeweiligen Vorlagenführung (32) aufliegen.

25. Verfahren nach einem der Ansprüche 16-24, dadurch gekennzeichnet, dass hinter dem Einzugsspalt (3) ein Sensor (34) vorgesehen ist, mit dessen Hilfe die Anwesenheit einer Vorlage (P) im Einzugsspalt (3) detektiert und bei Anwesenheit einer Vorlage (P) die Vorrichtung (1) aktiviert wird.

26. Verfahren nach einem der Ansprüche 16-25, dadurch gekennzeichnet, dass für genormten Vorlagen (P) die Anordnung der Messflecke auf der Vorlage (P) und die spektralen Daten der Messflecke in eine Speichereinheit der Auswerteeinheit (16) gespeichert werden, dass die Vorlage (P) in einer vorgegebenen longitudinalen Schrittweite, beispielsweise alle 5 mm, ausgemessen wird, und dass die gemessenen Werte jeweils mit den in der Speichereinheit abgespeicherten Daten nach dem Prinzip der Kreuzkorrelation solange verglichen werden, bis beste Übereinstimmung der Messwerte mit den Vorgabedaten erzielt ist.

27. Verfahren nach Anspruch 26, dadurch gekennzeichnet, dass das Ausmessen der Vorlage (P) spaltenweise erfolgt, wobei jeweils zum Ausmessen der benachbarten Spalte die Vorlage in entgegengesetzter Richtung unter der Remissions-Messanordnung (4) vorbeitransportiert wird.

28. Verfahren nach einem der Ansprüche 16-27, dadurch gekennzeichnet, dass die Vorlage (P) nach dem Ausmessen der Messfelder durch einen Ausgabespalt (10) wiederausgegeben wird, der an der dem Einzugsspalt (3) gegenüberliegenden Seite des Gerätes angeordnet ist.

29. Verfahren nach einem der Ansprüche 16-27, dadurch gekennzeichnet, dass die Vorlage (P) nach dem Ausmessen der Messfelder durch den Einzugsspalt (3) wieder ausgestossen wird.

## Claims

1. Appliance for recording photometric data arranged side by side and/or sequentially on a sheet-type or strip-type original, comprising a casing (2) with a feed gap (3), which has at least one stop (31) for the originals (P) on at least one side, a transport device (6, 7) arranged within the casing (2) for the automatic feeding of the original (P) along a transport path (T) within the casing, at least one reflectance measurement arrangement (4) for opaque originals (P), which is preferably arranged within the casing before the transport device (6, 7), viewed relative to the feed direction (I) of the original (P), which reflectance measurement arrangement (4) is passed by the original (P) while the latter is being fed to the inside of the casing and which reflectance measurement arrangement (4) is connected to an evaluation unit (16), and comprising a wavelength dispersion arrangement (43) which at least permits measurement of the original (P) in the three basic colours of red, green and blue, each stop (31) being arranged in a fixed location relative to the feed gap (3) for the originals (P), characterised in that the reflectance optical measurement system (4) and the original (P) gripped by the transport device (6, 7) can be moved relative to one another transverse to the feed direction (I) of the original (P).

2. Appliance according to Claim 1, characterised in that it additionally has a transmission measurement arrangement (5) and in that the reflectance measurement arrangement (4) with the reflectance optical measurement system (41) is arranged above the transport path (T) of the original (P) whereas the transmission measurement arrangement (5) with its transmission optical measurement system (51) is arranged below the transport path (T).

3. Appliance according to Claim 1 or 2, characterised in that from an initial position, the reflectance optical measurement system (41) can be moved transversely to the feed direction (I) of the original (P).

4. Appliance according to Claim 3, characterised in that the reflectance optical measurement system (41) can be pivoted relative to the initial position and in that the circular arc described by a light admission aperture (47) of the reflectance optical measurement system (41) while it is being pivoted is located in a plane parallel to the transport path (T).

5. Appliance according to Claim 3 or 4, characterised in that in the initial position of the reflectance optical measurement system (41), the lamp (42) of the reflectance optical measurement system (41) is arranged precisely over the transmission optical measuring system (51) of the transmission measurement arrangement (5).

6. Appliance according to Claim 4 or 5, characterised in that the wavelength dispersion arrangement (43) is a filter wheel which can be driven by an electric motor (8) and in that the reflectance optical measurement system (41) can be pivoted by means of the drive motor (8) for the filter wheel (43).

7. Appliance according to Claim 6, characterised in that the transport device (6, 7) for the automatic feed of the original (P) includes at least one pair of rollers or rolls which, in relation to the feed direction (I), is arranged at a short distance, for example at a distance of approximately 15 mm to 35 mm, preferably approximately 25 mm, behind the reflectance optical measurement system (41) and in which arrangement, one of the rollers or rolls can be driven by the drive motor (8) of the filter wheel (43).

8. Appliance according to Claim 7, characterised in that the reflectance optical measurement system (41) and the transport device (6, 7) can be locked and in that a corresponding locking device (12, 121, 13, 14, 92, 93) is provided by means of which it is always the case that either the reflectance optical measurement system (41) is locked against pivoting or the transport device (6, 7) is locked.

9. Appliance according to one of the preceding claims, characterised in that the feed gap (3) has an approximately horizontal orientation and has, on at least one side, a plurality of, and preferably five, stops (31) for different widths of original (P), which stops are arranged in such a way that the stop for the narrower original (P) is in each case located closer to the centre of the feed gap than the respectively adjacent wider stop and in that the stops for narrower originals (P) are located at a lower level than the adjacent stops for wider originals, a guide (32) which rises in the manner of a ramp from the stop (31) to the level of the transport path (T) being provided for each width of original.

10. Appliance according to Claim 9, characterised in that stops (31) are provided on both sides of the centre of the feed gap in such a way that each original (P) comes in contact with a stop (31) along the length of both sides.

11. Appliance according to Claim 9 or 10, characterised in that holding-down rollers (33) or similar mobile retention means for the original are arranged immediately behind the feed gap (3), which holding-down rollers (33) or similar movable retention means for the original can be moved against the gravitational force or a spring force from their rest position in which they are in contact with the respective guide (32) for the original.

12. Appliance according to one ofthe preceding claims, characterised in that a sensor (34) is arranged behind the feed gap (3), which sensor (34) detects the presence of an original (P) in the feed gap (3) and, when an original (P) is present, activates the appliance (1).

13. Appliance according to Claims 11 and 12, characterised in that the sensor (34) is a rotation sensor which detects the rotation ofthe holding-down rollers (33).

14. Appliance according to one of the preceding claims, characterised in that it is designed as a "stand-alone" unit and in that a delivery gap (10) for the originals (P) is arranged on the side of the unit (1) opposite to the feed gap (3).

15. Appliance according to one of Claims 1 to 13, characterised in that it is integrated into other installations, for example a photographic printer, and in that the transport device (6, 7) for the originals (P) can be operated in the opposite direction after the measurement of the measurement fields in such a way that the originals (P) are ejected back through the feed gap (3).

16. Method for recording photometric data arranged side by side and/or sequentially on a sheet-type or strip-type original, in which method a sheet-type or strip-type original (P) with measurement fields arranged side by side and/or sequentially is fed through a feed gap (3), which has at least one stop (31) for the originals (P) on at least one side, to a transport device (6, 7) arranged within a casing (2), which transport device (6, 7) automatically pulls the original (P) along a transport path (T) to the inside of the casing and guides it past a reflectance measurement arrangement (4) with a reflectance optical measurement system (41) for opaque originals (P) which, viewed relative to the feed direction (I) of the original (P), is preferably arranged before the transport device (6, 7) within the casing and is connected to evaluation electronics (16), the opaque originals (P) being measured by the reflectance measurement arrangement (4) and analysed with the aid of a wavelength dispersion arrangement (43) into at least the three basic colours of red, green and blue, the measurement data recorded being relayed to the evaluation electronics (16) for further processing and each stop (31) being arranged at a fixed location relative to the feed gap (3) for the originals (P), characterised in that the reflectance optical measurement system (41) and the original (P) gripped by the transport device (6, 7) are moved relative to one another transverse to the feed direction (I) in order to direct them to the measurement fields arranged side by side.

17. Method according to Claim 16, characterised in that transparent originals (P) are measured with the aid of a transmission measurement arrangement (5) with a transmission optical measurement system (51) and, in a manner analogous to the procedure in the case of opaque originals, are analysed into at least the three basic colours of red, blue and green.

18. Method according to Claim 17, characterised in that from an initial position, the reflectance optical measurement system (41) is moved transversely, and preferably pivoted, relative to the original (P).

19. Method according to Claim 18, characterised in that the initial position of the reflectance optical measurement system (41) is determined without an original (P) by carrying out an intensity measurement with the aid of the transmission measurement arrangement (5) during the pivoting of the reflectance optical measurement system (41), the position of the reflectance optical measurement system (41) at which the maximum intensity is measured by the transmission measurement arrangement (5) being defined as the initial position.

20. Method according to one of Claims 16 to 19, characterised in that the wavelength dispersion arrangement (43) is a filter wheel which.is driven by an electric motor (8).

21. Method according to Claim 20, characterised in that the reflectance optical measurement system (41) and the transport means (6, 7) for the original (P) are driven by the drive motor (8) for the filter wheel (43), arrangements being made to ensure that it is always the case that either the transport means (6, 7) for the original (P) only or the reflectance optical measurement system (41) only is moved so that the reflectance optical measurement system (41) is only moved transversely relative to the original (P) when the original (P) is at rest and vice versa.

22. Method according to one of Claims 16 to 21, characterised in that the originals (P) are supplied to the feed gap (3) aligned approximately horizontally and, on at least one side, a plurality of, and preferably five, stops (31) for different widths of original (9) are provided, which stops are arranged in such a way that the stop for the narrower original is in each case located closer to the centre of the feed gap than the respectively adjacent wider stop and in that the stops for narrower originals are arranged at a lower level than the adjacent stops for wider originals, the originals from the respective stop being moved forward over a ramp-type guide (32) for the originals onto the level of the transport path (T) within the appliance (1)

23. Method according to Claim 22, characterised in that stops (31) are arranged on both sides of the centre of the feed gap in such a way that each original (P) is guided by a stop (31) along the length of both sides.

24. Method according to one of Claims 16 to 23, characterised in that the originals (P) are moved through under holding-down rollers (33), or similar movable retention means for the original, which are arranged immediately behind the feed gap (3) and can be moved against the gravitational force or a spring force from their rest position in which they are in contact on the respective guide (32) for the original.

25. Method according to one of Claims 16 to 24, characterised in that behind the feed gap (3), a sensor (34) is provided by means of which the presence of an original (P) in the feed gap (3) is detected and, when an original (P) is present, the appliance (1) is activated.

26. Method according to one of Claims 16 to 25, characterised in that in the case of standardised originals (P), the arrangement of the measurement spots on the original (P) and the spectral data of the measurement spots are stored in a memory unit of the evaluation unit (16), in that the original (P) is measured at a pre-set longitudinal step width, for example every 5 mm, and in that the measured values are each compared with the data stored in the memory unit in accordance with the cross-correlation principle until the best agreement between the measured values and the pre-set data is achieved.

27. Method according to Claim 26, characterised in that the measurement of the original (P) takes place in columns, the original being transported under the reflectance measurement arrangement (4) in the opposite direction in each case in order to measure the adjacent column.

28. Method according to one of Claims 16 to 27, characterised in that after the measurement of the measurement fields, the original (P) is returned through a delivery gap (10), which is arranged on the side of the unit opposite to the feed gap (3).

29. Method according to one of Claims 16 to 27, characterised in that after the measurement of the measurement fields, the original (P) is ejected back through the feed gap (3).

## Revendications

1. Dispositif de saisie de valeurs photométriques disposées, sur un original en forme de feuille ou de bande, l'une à côté de l'autre et/ou l'une derrière l'autre, comportant une carrosserie (2) avec une fente d'entrée (3) qui présente au moins d'un côté au moins une butée (31) pour des originaux (P), un mécanisme de transport (6, 7) disposé à l'intérieur de la carrosserie (2), pour l'avance automatique de l'original (P) le long d'un chemin de transport (T) à l'intérieur de la carrosserie, au moins pour des documents opaques (P), un appareil (4) de mesure de la luminance de réflexion diffuse qui est disposé à l'intérieur de la carrosserie, de préférence en avant du mécanisme de transport (6, 7) par rapport à la direction d'avance (I) de l'original (P) et devant lequel passe l'original (P) pendant son avance à l'intérieur de la carrosserie, et qui est relié à un organe de traitement (16), ainsi qu'un appareil (43) de dispersion des longueurs d'ondes qui permet au moins une mesure de l'original (P) dans les trois couleurs de base, rouge, vert et bleu, chaque butée (31) étant disposée fixe par rapport à la fente d'entrée (3) pour les originaux (P), caractérisé par le fait que l'optique (4) de mesure de la luminance de réflexion diffuse et l'original (P) saisi par le mécanisme de transport (6, 7) peuvent se déplacer l'un par rapport à l'autre transversalement à la direction d'avance (I) de l'original (P).

2. Dispositif selon la revendication 1, caractérisé par le fait qu'il présente en outre un appareil (5) de mesure de la luminance de transmission et que l'appareil (4) de mesure de la luminance de réflexion diffuse avec son optique (41) de mesure de la luminance de réflexion diffuse est disposé au dessus du chemin de transport (T) de l'original (P), tandis que l'appareil (5) de mesure de la luminance de transmission avec son appareil (51) de mesure de la luminance de transmission est disposé en dessous du chemin de transport (T).

3. Dispositif selon la revendication 1 ou 2, caractérisé par le fait que l'optique (41) de mesure de la luminance de réflexion diffuse peut, en partant d'une position initiale, se déplacer transversalement par rapport à la direction d'avance (I) de l'original (P).

4. Dispositif selon la revendication 3, caractérisé par le fait que l'optique (41) de mesure de la luminance de réflexion diffuse peut pivoter par rapport à la position initiale et que l'arc de cercle que décrit, lors du pivotement, un diaphragme (47) d'entrée de la lumière de l'optique (41) de mesure de la luminance de réflexion diffuse se situe dans un plan parallèle au chemin de transport (T).

5. Dispositif selon la revendication 3 ou 4, caractérisé par le fait que dans la position initiale de l'optique (41) de mesure de la luminance de réflexion diffuse, la lampe (42) de l'optique (41) de mesure de la luminance de réflexion diffuse est exactement disposée au dessus de l'optique (51) de mesure de la luminance de transmission de l'appareil (5) de mesure de la luminance de transmission.

6. Dispositif selon la revendication 4 ou 5, caractérisé par le fait que l'appareil (43) de dispersion des longueurs d'ondes est une roue à filtres qui peut être entraînée par un moteur électrique (8) et que l'optique (41) de mesure de la luminance de réflexion diffuse peut pivoter à l'aide du moteur d'entraînement (8) de la roue à filtres (43).

7. Dispositif selon la revendication 6, caractérisé par le fait que le mécanisme de transport (6, 7) comporte, pour l'avance automatique de l'original (P), au moins une paire de rouleaux ou de cylindres, qui, rapportés à la direction d'avance (I), est disposée à courte distance, par exemple à une distance d'environ 15 mm à 35 mm, de préférence environ 25 mm, derrière l'optique (41) de mesure de la luminance de réflexion diffuse, l'un des rouleaux ou des cylindres pouvant être entraîné par le moteur d'entraînement (8) de la roue à filtres (43).

8. Dispositif selon la revendication 7, caractérisé par le fait que l'optique (41) de mesure de la luminance de réflexion diffuse et le mécanisme de transport (6, 7) peuvent être bloqués et qu'est prévu un mécanisme de blocage approprié (12, 121, 13, 14, 92, 93) au moyen duquel sont toujours bloqués soit, à l'égard d'un pivotement, l'optique (41) de mesure de la luminance de réflexion diffuse, soit le mécanisme de transport (6, 7).

9. Dispositif selon l'une des revendications précédentes, caractérisé par le fait que la fente d'entrée (3) est orientée à peu près horizontalement et présente, pour des originaux (P) de largeurs différentes, au moins d'un côté, plusieurs, de préférence cinq, butées (31) qui sont disposées de façon que la butée prévue pour l'original (P) plus étroit se trouve plus près du milieu de la fente d'entrée que la butée plus large respectivement voisine, et que les butées pour originaux (P) plus étroits soient disposés à un niveau inférieur à celui des butées voisines prévues pour originaux plus larges, étant précisé qu'est chaque fois prévu un guidage d'original (32) qui, depuis la butée (31) monte en rampe jusqu'au niveau du chemin de transport (T).

10. Dispositif selon la revendication 9, caractérisé par le fait que des deux côtés du milieu de la fente d'entrée, des butées (31) sont prévues de façon que chaque original (P) s'appuie contre une butée (31) sur ces deux côtés longitudinaux.

11. Dispositif selon la revendication 9 ou 10, caractérisé par le fait qu'immédiatement derrière la fente d'entrée (3) sont disposés des rouleaux presse-original (33) ou moyens mobiles semblables de maintien des originaux, qui, à l'encontre de la pesanteur ou d'une force élastique, peuvent se déplacer hors de leur position de repos dans laquelle ils reposent sur le guidage d'originaux respectifs (32).

12. Dispositif selon l'une des revendications précédentes, caractérisé par le fait que derrière la fente d'entrée (3) est disposé un détecteur (34) qui détecte la présence d'un original (P) dans la fente d'entrée (3) et, en présence d'un original (P), active le dispositif (1).

13. Dispositif selon la revendication 11 ou 12, caractérisé par le fait que le détecteur (34) est un détecteur rotatif qui détecte la rotation des rouleaux presse-original (33).

14. Dispositif selon l'une des revendications précédentes, caractérisé par le fait qu'il est conçu en tant qu'appareil " autonome " et que du côté de l'appareil (1) opposé à la fente d'entrée (3) est disposée une fente de sortie (10) pour les originaux (P).

15. Dispositif selon l'une des revendications 1-13, caractérisé par le fait qu'il est intégré dans d'autres installations, par exemple dans une tireuse photographique, et qu'après la mesure des champs de mesure, le mécanisme de transport (6, 7) pour les originaux (P) peut être entraîné en sens inverse de façon que les originaux (P) soient à nouveau expulsés par la fente d'entrée (3).

16. Procédé de saisie de valeurs photométriques disposées sur un original en forme de feuille ou de bande, l'une à côté de l'autre et/ou l'une derrière l'autre, dans le cas duquel un original (P), sous forme de feuille ou de bande, avec des champs de mesure disposés l'un à côté de l'autre et/ou l'un derrière l'autre, est amené, en passant par une fente d'entrée (3) qui présente au moins d'un côté au moins une butée (31) pour les originaux (P), à un mécanisme de transport (6, 7) qui est disposé à l'intérieur d'une carrosserie (2) et qui fait avancer automatiquement l'original (P), le long d'un chemin de transport (T), à l'intérieur de la carrosserie et passe devant un appareil (4) de mesure de la luminance de réflexion diffuse avec une optique (41) de mesure de la luminance de réflexion diffuse pour originaux opaques (P) qui est disposé à l'intérieur de la carrosserie, de préférence en avant du mécanisme de transport (6, 7) par rapport à la direction d'avance (I) de l'original (P) et qui est relié à un circuit électronique de traitement (16), les documents opaques (P) étant mesurés par l'appareil (4) de mesure de la luminance de réflexion diffuse et étant analysés à l'aide d'un appareil (43) de dispersion des longueurs d'ondes au moins dans les trois couleurs de base, rouge, vert et bleu, et les valeurs de mesure saisies étant transmises au circuit électronique de traitement (16) pour la poursuite du traitement, chaque butée (31) étant disposée fixe par rapport à la fente d'entrée (3) pour les originaux (P), caractérisé par le fait que l'optique (41) de mesure de la luminance de réflexion diffuse et l'original (P) saisi par le mécanisme de transport (6, 7) peuvent se déplacer l'un par rapport à l'autre transversalement à la direction d'avance (I), pour atteindre les champs de mesure disposés l'un à côté de l'autre.

17. Procédé selon la revendication 16, caractérisé par le fait que des originaux transparents (P) sont mesurés à l'aide d'un appareil (5) de mesure de la luminance de transmission avec une optique (51) de mesure de la luminance de transmission et, de façon analogue au processus correspondant aux documents opaques, sont analysés au moins dans les trois couleurs de base, rouge, bleu et vert.

18. Procédé selon la revendication 17, caractérisé par le fait qu'à partir d'une position initiale, l'optique (41) de mesure de la luminance de réflexion diffuse se déplace transversalement, de préférence pivote par rapport à l'original (P).

19. Procédé selon la revendication 18, caractérisé par le fait que la position initiale de l'optique (41) de mesure de la luminance de réflexion diffuse est déterminée sans original (P), en ce sens que pendant le pivotement de l'optique (41) de mesure la luminance de réflexion diffuse, il est procédé à une mesure d'intensité à l'aide de l'appareil (5) de mesure de la luminance de transmission et qu'est définie comme position initiale la position de l'optique (41) de mesure la luminance de réflexion diffuse pour laquelle est mesurée une intensité maximale en provenance de l'appareil (5) de mesure de la luminance de transmission.

20. Procédé selon l'une des revendications 16-19, caractérisé par le fait que l'appareil (43) de dispersion des longueurs d'ondes est une roue à filtres qui est entraînée par un moteur électrique (8).

21. Procédé selon la revendication 20, caractérisé par le fait que l'optique (41) de mesure de la luminance de réflexion diffuse et le moyen de transport (6, 7) pour l'original (P) sont entraînés par le moteur d'entraînement (8) prévu pour la roue à filtres (43), ce qui garantit que ne sont toujours déplacés que soit le moyen de transport (6, 7) pour l'original (P), soit l'optique (41) de mesure de la luminance de réflexion diffuse, de sorte que l'optique (41) de mesure de la luminance de réflexion diffuse ne se déplace transversalement par rapport à l'original (P) que si l'original (P) reste au repos et inversement.

22. Procédé selon l'une des revendications 16-21, caractérisé par le fait que les originaux (P) sont amenés à la fente d'entrée (3) orientées à peu près horizontalement et que sont prévues, pour des originaux (P) de largeurs différentes, au moins d'un côté, plusieurs, de préférence cinq, butées (31) qui sont disposées de façon que la butée prévue pour l'original (P) plus étroit se trouve plus près du milieu de la fente d'entrée que la butée plus large respectivement voisine, et que les butées pour originaux (P) plus étroits soient disposées à un niveau inférieur à celui des butées voisines prévues pour originaux plus larges, étant précisé qu'au moyen d'un guidage d'originaux (32) en forme de rampe, la butée respective fait avancer les originaux à l'intérieur du dispositif (1) jusqu'au niveau du chemin de transport (T).

23. Procédé selon la revendication 22, caractérisé par le fait que des deux côtés du milieu de la fente d'entrée sont prévues des butées (31) de façon que chaque original (P) soit guidé par une butée (31) de ses deux côtés longitudinaux.

24. Procédé selon l'une des revendications 16-23, caractérisé par le fait que l'on fait avancer les originaux (P) en les faisant passer sous des rouleaux presse-original (33) ou moyens mobiles analogues de maintien des originaux, qui sont disposés immédiatement derrière la fente d'entrée (3) et qui, à l'encontre de la pesanteur ou d'une force élastique, peuvent se déplacer hors de leur position de repos dans laquelle ils reposent sur le guidage d'originaux respectif (32).

25. Procédé selon l'une des revendications 16-24, caractérisé par le fait que derrière la fente d'entrée (3) est prévu un détecteur (34) à l'aide duquel est détectée la présence d'un original (P) dans la fente d'entrée (3) et qui, en présence d'un original (P), active le dispositif (1).

26. Procédé selon l'une des revendications 16-25, caractérisé par le fait que pour des originaux (P) normalisés, la disposition de la tache lumineuse de mesure sur l'original (P) et les valeurs spectrales de la tache lumineuse de mesure sont mémorisées dans une mémoire de l'organe de traitement (16), que l'original (P) est mesuré selon un pas longitudinal prescrit, par exemple tous les 5 mm, et que les valeurs mesurées sont respectivement comparées avec les valeurs mémorisées, dans la mémoire, selon le principe de la corrélation croisée, jusqu'à ce que soit obtenue une meilleure coïncidence des valeurs de mesure avec les valeurs prescrites.

27. Procédé selon la revendication 26, caractérisé par le fait que la mesure de l'original (P) se fait colonne par colonne, étant précisé que pour la mesure de la colonne voisine, l'original passe, en sens opposé, sous l'appareil (4) de mesure de la luminance de réflexion diffuse.

28. Procédé selon l'une des revendications 16-27, caractérisé par le fait qu'après la mesure des champs de mesure, l'original (P) ressort par une fente de sortie (10) disposée du côté de l'appareil opposé à la fente d'entrée (3).

29. Procédé selon l'une des revendications 16-27, caractérisé par le fait qu'après la mesure des champs de mesure l'original (P) est réexpulsé par la fente d'entrée (3).
